# EUROPEAN PATENT SPECIFICATION

(11) **EP 3 671 795 B1**
(45) Date of publication and mention of the grant of the patent: **19.06.2024**
(21) Application number: 18214818.9
(22) Date of filing: 20.12.2018
(51) Int. Cl.: H01H 33/666, H02K 26/00

(54) **ACTUATOR FOR A MEDIUM VOLTAGE CIRCUIT BREAKER**
AKTUATOR FÜR EINEN MITTELSPANNUNGSSCHUTZSCHALTER
ACTIONNEUR POUR UN DISJONCTEUR MOYENNE TENSION

(43) Date of publication of application: 24.06.2020
(73) Proprietor: ABB Schweiz AG, 5400 Baden (CH)
(72) Inventor: Tüysüz, Arda, 64295 Darmstadt (DE); Nitsch, Claus, 68649 Groß-Rohrheim (DE); Mechler, Günther, 74855 Haßmersheim (DE); Reutner, Holger, 69214 Eppelheim (DE); Breisch, Sebastian, 69239 Neckarsteinach (DE); Stahl, Thomas, 74937 Spechbach (DE); Schindler, Thorsten, 69198 Schriesheim (DE); Morelli, Emanuele, 24052 Azzano San Paolo (IT); Buchh, Maria, 24010 Sorisole (IT)
(74) Representative: Maiwald GmbH

(56) References cited:
- WO-A1-2019/063104
- FR-A- 1 299 939
- US-A1- 2009 058 218
- US-B1- 6 674 349

## Description

### FIELD OF THE INVENTION

The present invention relates to an actuator for a medium voltage circuit breaker, and to medium voltage circuit breaker having such an actuator.

### BACKGROUND OF THE INVENTION

US6674349B1 describes that the device comprises an armature mechanically connected to an actuating rod of the contacts of the apparatus and movable in a support block between a rest position and an active position, at least one permanent magnet and at least one winding. The magnet(s) has(have) the function of holding the armature in the rest position whereas the winding(s) has(have) the function of generating, when an opening order occurs due for example to a voltage surge or other (or respectively a closing order), a magnetic field designed to counteract the force of the magnets so as to move the armature to the active position resulting in separation of the contacts (or respectively closing of the contacts). This device is characterized in that the above-mentioned armature is mounted movable in rotation between two stops arranged in the support, said stops respectively bounding the two above-mentioned positions.

Conventional medium voltage switchgear solutions use loaded springs for opening and closing operations. However, this opening and closing behaviour cannot be influenced after assembly. Replacing the spring for the closing operation by an electromagnetic actuator allows for the control of the closing operation by means of current control. In power distribution grids, with voltage levels between 10kV and 30kV, each distribution circuit is provided with a medium voltage switch that is opened in case of short circuit or overload or in case of maintenance work in the close environment of that circuit. An opening operation is usually done by the separation of the contact of two poles within a vacuum chamber thus causing the ignition of a vacuum arc carrying the circuit current in the form of ionized pole material. A fast separation of the poles and an appropriate chamber design help to interrupt the arc and thus the current. A closing operation should also be performed by a fast motion of at least one of the two poles of a phase. State of the art medium voltage circuit breakers use spring-driven actuators. These lack controllability. One potential drawback is that the mechanism is always actuated with the maximum available force, regardless of the speed requirement of a particular operation. A further drawback is that the operation behaviour may change under different environmental conditions and aging. Moreover, spring-driven actuators usually consist of many moving parts, making them prone to mechanical failure. An electromagnetic actuator is inherently controlled, meaning that the speed of each individual operation may be controlled by means of an electronic control unit. Therefore, electromagnetic actuators have been proposed for use in medium voltage circuit breakers. The challenges of an electromagnetic drive are primarily: Cost (competing with low-cost springs); High-torque requirement in compact volume (competing with very high force density of springs); Robustness (electronics are needed for controlled operation); and Modularity (current spring driven actuators can be mounted/unmounted with minimum disassembly of the circuit breaker. Similar modularity is expected from an alternative, electromagnetic drive.)

There is a need to address these issues.

### SUMMARY OF THE INVENTION

It would be advantageous to have an improved actuator for a medium voltage circuit breaker.

The object of the present invention is solved with the subject matter of the independent claims, wherein further embodiments are incorporated in the dependent claims.

In a first aspect, there is provided an actuator for a medium voltage circuit breaker as defined in appended claim 1.

In an example of the application, there is provided an actuator for a medium voltage circuit breaker, the actuator comprising:
- a rotor;
- a stator;
- at least one coil.

The rotor is configured to be fixedly mounted to a main shaft of a circuit breaker of a medium voltage switchgear such that the rotor and main shaft rotate together. The stator is configured to be mounted at least partially around the rotor. The at least one coil is wound around at least a part of the stator. An angle of rotation of the rotor with respect to the stator is limited.

In other words, a limited angular stroke rotational actuator is provided that embraces directly the main shaft (direct drive) of a medium voltage circuit breaker.

Mounting the rotational actuator directly on the main shaft of the circuit breaker avoids the use of additional linkages, thereby decreasing cost and increasing reliability. Having a limited rotational stroke enables the use of a single-phase actuator, thereby eliminating the need of a multi-phase controller, further decreasing cost and increasing reliability.

By using the reluctance principle for torque generation, permanent magnets can be avoided, again decreasing cost of the actuator, whilst maintaining torque generation capabilities. Without permanent magnets, the robustness of the design increases, as permanent magnets may weaken at higher temperatures or be mechanically brittle.

The angle of rotation of the rotor with respect to the stator is limited by a driving electromagnetic force distribution. In other words, a non-zero driving electromagnetic force can only be applied for a limited range of rotational positions of the rotor.

Thus, rotation of the rotor with respect to the stator can be limited by a mechanical stop, where for example two parts touch each other at the end of a free stroke, where at least one of those parts can be protrusion. However, without such a mechanical end stop, this limiting of rotation is still provided, and it comes from the fact that the actuator can generate torque for only a limited range of angular positions, and outside of those, the actuator cannot actively rotate the rotor. However, the rotor can still be rotated by a force external to the actuator.

The stator is configured to be mounted circumferentially around the rotor.

In an example, the stator is configured to be mounted to a stationary housing of the circuit breaker.

Stationary here means that the main shaft of the circuit breaker rotates relative to the stationary housing.

In an example, the rotor comprises a ferromagnetic material.

In an example, the stator comprises a ferromagnetic material.

In other words, the actuator is a reluctance motor or reluctance actuator, where a stator having a coil generates a magnetic flux when excited with electrical current that results in a non-zero torque being applied to the rotor.

When mounted to the main shaft of the circuit breaker, the actuator is configured to move from a first unaligned position to a second aligned position where poles of the rotor and stator poles are aligned. Thus, rotor of the actuator moves, rather than the complete actuator assembly, and the movement is due to the electromagnetic torque, which is a result of the electrical current running in the coil or coils.

In an example, in the first unaligned position the rotor and stator poles do not overlap.

Moving from the first unaligned position to the second aligned position, the rotor rotates a defined amount with respect to the stator before the rotor and stator poles start to overlap.

In other words, in a final closed aligned position the rotor and stator poles overlap, whilst in a start open unaligned position the rotor and stator poles do not overlap, and the rotor must rotate by an amount for the poles to begin to overlap. In this manner, the maximum available torque can be obtained that accounts for inductance in the stator coil meaning that the current rises with a slope once the coil is energized. The rising current causes the rotor to rotate. Hence, the start unaligned position can be defined such that when the current has reached its maximum value the poles of the rotor and stator are at just at the edge of overlapping in order to maximise "starting" torque.

In an example, when in the aligned position, an angularly constant air gap separates an outer surface of the rotor that faces an inner surface of the stator.

In an example, the outer surface of the rotor has a radius of curvature and the inner surface of the stator pole has a radius of curvature. In this example the radii of curvature share a common origin that is centred on an axis of the main shaft of the circuit breaker.

In an example, when in the aligned position, an angularly varying air gap separates an outer surface of the rotor that faces an inner surface of the stator.

In an example, the outer surface of the rotor has a radius of curvature and the inner surface of the stator has a radius of curvature. In this example the radii of curvature do not share a common origin.

In an example, in moving from the first unaligned position to the second aligned position, the air gap decreases.

In an example, in the aligned position a stepwise varying air gap separates an outer surface of the rotor that faces an inner surface of the stator.

In an example, the outer surface of the rotor has a plurality of radii of curvature and the inner surface of the stator has a radius of curvature, or the outer surface of the rotor has a radius of curvature and the inner surface of the stator has a plurality of radii of curvature or the outer surface of the rotor has a plurality of radii of curvature and the inner surface of the stator has a plurality of radii of curvature.

In an example, for the stepwise varying air gap the radii of curvature share a common origin that is centred on an axis of the main shaft of the circuit breaker.

In an example, the radii of curvature of the rotor and of the stator do not do not share a common origin.

In an example, at least two of radii of curvature of the rotor do not share a common origin with each other.

In an example, at least two of radii of curvature of the stator do not share a common origin with each other.

In an example, the at least one coil is wound around at least a part of a first stator pole and/or the at least one coil is wound around at least a part of a second stator pole.

In an example, the rotor comprises two parts.

In an example, the stator comprises two parts.

In an example, the stator is configured such that the angle of rotation of the rotor is limited with respect to the stator.

In an example, the stator comprises at least one protrusion, wherein a first stator pole comprises a protrusion and/or a second stator pole comprises a protrusion, and wherein upon actuation as the rotor rotates, it approaches the at least one protrusion.

In a second aspect, there is provided a medium voltage circuit breaker with at least one vacuum interrupter, each comprising moveable electrical contacts for electrical power interruption, operated via a main shaft to which is mounted an actuator according to the first aspect.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows cross sectional views and the magnetic flux lines for an actuator for a medium voltage circuit breaker;
Fig. 2 shows an example of placement of an actuator in a medium voltage circuit breaker;
Fig. 3 shows a schematic example of the kinematic arrangement and motion during the closing operation of a medium voltage circuit breaker; and
Fig. 4 shows examples of continuous, stepped and eccentric rotor shapes.

### DETAILED DESCRIPTION OF EMBODIMENTS

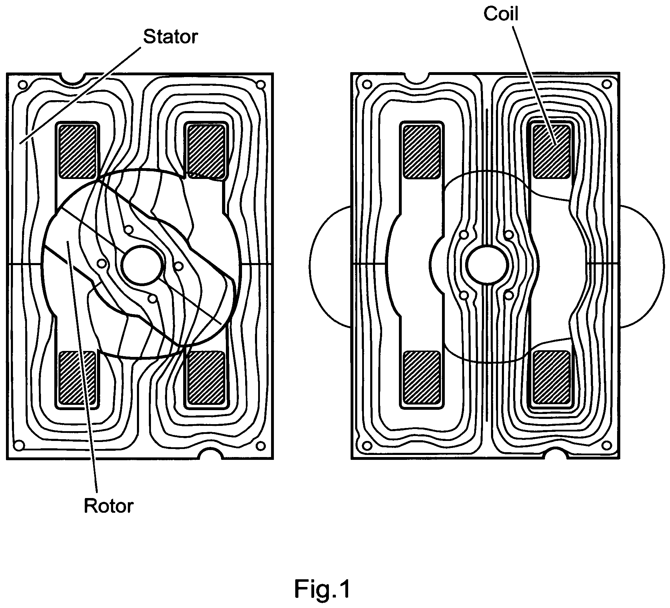

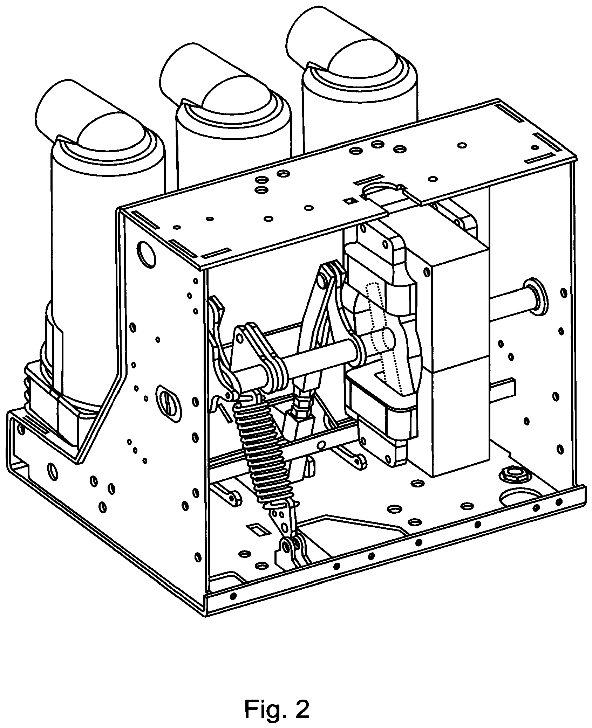

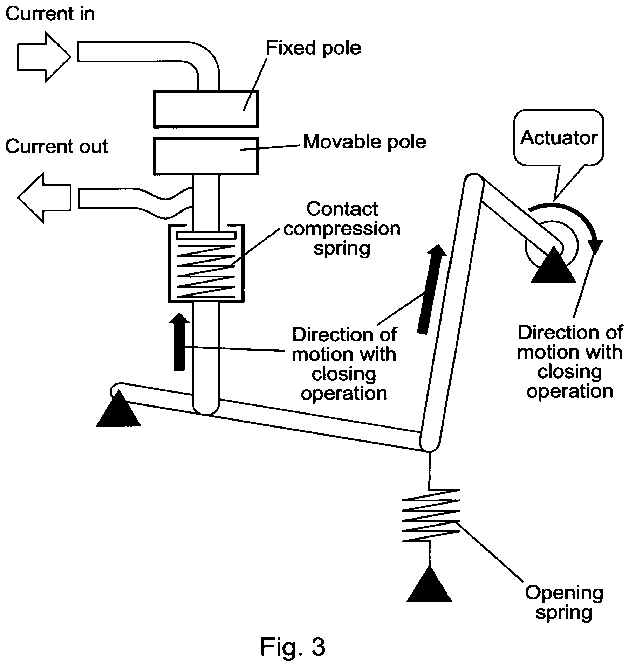

Figs. 1-4 show actuators for a medium voltage circuit breaker as provided here, and how they can operate with a medium voltage circuit breaker.

These figures show an actuator for a medium voltage circuit breaker. The actuator comprises a rotor, a stator, and a at least one coil. The rotor is configured to be fixedly mounted to a main shaft of a circuit breaker of a medium voltage switchgear such that the rotor and main shaft rotate together. The stator is configured to be mounted at least partially around the rotor. The at least one coil is wound around at least a part of the stator. An angle of rotation of the rotor with respect to the stator is limited.

The angle of rotation of the rotor with respect to the stator is limited by a driving electromagnetic force distribution.

In an example, the angle of rotation of the rotor is limited to less than one whole rotation around an axis of the main shaft.

The stator is configured to be mounted circumferentially around the rotor.

According to an example, the stator is configured to be mounted to a stationary housing of the circuit breaker.

According to an example, the rotor comprises a ferromagnetic material.

According to an example, the stator comprises a ferromagnetic material.

When mounted to the main shaft of the circuit breaker the actuator is configured to move from a first unaligned position to a second aligned position where poles of the rotor and stator poles are aligned. The unaligned position can also be considered to be a start position and the aligned position to be an end position. Also, referring to Fig. 1, the stator pole is the part of the stator (core), around which is wound a coil.

According to an example, in the first unaligned position the rotor and stator poles do not overlap.

In moving from the first unaligned position to the second aligned position the rotor rotates a defined amount with respect to the stator before the rotor and stator poles start to overlap.

According to an example, when in the aligned position, an angularly constant air gap separates an outer surface of the rotor that faces an inner surface of the stator.

According to an example, the outer surface of the rotor has a radius of curvature and the inner surface of the stator pole has a radius of curvature. In this example, the radii of curvature share a common origin that is centred on an axis of the main shaft of the circuit breaker.

According to an example, when in the aligned position, an angularly varying air gap separates an outer surface of the rotor that faces an inner surface of the stator.

According to an example, the outer surface of the rotor has a radius of curvature and the inner surface of the stator has a radius of curvature. In this example, the radii of curvature do not share a common origin.

In an example, the origin of the radius of curvature of the outer surface of the rotor is the axis of main shaft or the origin of the radius of curvature of the inner surface of the stator pole is the axis of the main shaft.

According to an example, in moving from the first unaligned position to the second aligned position the air gap decreases.

According to an example, when in the aligned position, a stepwise varying air gap separates an outer surface of the rotor that faces an inner surface of the stator.

According to examples, the outer surface of the rotor has a plurality of radii of curvature and the inner surface of the stator has a radius of curvature, or the outer surface of the rotor has a radius of curvature and the inner surface of the stator has a plurality of radii of curvature or the outer surface of the rotor has a plurality of radii of curvature and the inner surface of the stator has a plurality of radii of curvature.

According to an example, the radii of curvature of the rotor and of the stator do not do not share a common origin.

According to an example, at least two of radii of curvature of the rotor do not share a common origin with each other.

In other words, the stator radii can have the origin coinciding with the main rotational axis, but the radii of the rotor curvatures have two different centers elsewhere.

According to an example, at least two of radii of curvature of the stator do not share a common origin with each other.

In other words, the rotor radii can have the origin coinciding with the main rotational axis, but the radii of the stator curvatures have two different centers elsewhere.

According to an example of the stepwise varying air gap, the radii of curvature share a common origin that is centred on an axis of the main shaft of the circuit breaker.

According to an example, the at least one coil is wound around at least a part of a first stator pole and/or the at least one coil is wound around at least a part of a second stator pole.

According to an example, the rotor comprises two parts. In an example, the two parts are identical. In an example, the two parts are not identical. Thus, the rotor poles need not be identical.

According to an example, the stator comprises two parts. In an example, the two parts are identical. In an example, the two parts are not identical. Thus, the stator poles need not be identical.

In an example, the stator comprises a ferromagnetic yoke configured to guide magnetic flux from a first stator pole to a second stator pole.

In an example, the magnetic yoke of the stator extends equally in both circumferential sides of the stator. In this way, two equal magnetic paths are provided for the magnetic flux that crosses from the air gap to the stator pole.

In an example, the magnetic yoke extends unequally on both circumferential sides of the stator. In this way, one more permeable and one less permeable path are provided for the flux. This can enable the actuator to fit into housings where the space around the main shaft is not equal on both sides.

In an example, the yoke can connect to a stator pole only from one side, providing only a single path for the flux only on one side of the stator pole.

According to an example, the stator is configured such that the angle of rotation of the rotor is limited with respect to the stator.

According to an example, the stator comprises at least one protrusion, wherein a first stator pole comprises a protrusion and/or a second stator pole comprises a protrusion, and wherein upon actuation as the rotor rotates, it approaches the at least one protrusion.

The figures also show a medium voltage circuit breaker with at least one vacuum interrupter, each comprising moveable electrical contacts for electrical power interruption, operated via a main shaft to which is mounted an actuator as described above.

The challenges of an electromagnetic actuator within the context of medium voltage switchgear are tackled with the present actuator described with respect to Figs. 1-4 by using a limited angle rotating actuator embracing directly the main shaft of a circuit breaker. Mounting the rotational actuator directly on the main shaft avoids the use of additional linkages, thereby decreasing the cost and increasing the reliability. The limited rotational stroke makes it possible to use a single-phase actuator, thereby eliminating the need of a multi-phase electronic controller, thereby decreasing the cost and increasing the reliability at the same time. Permanent magnets can be avoided and the reluctance principle utilized for torque generation, which decreases the cost of the actuator and can improve its robustness while not compromising the torque capability significantly.

As shown in the figures, a rotor with magnetically salient poles embraces the main shaft and rotates together with the main shaft. A stator is fixed circumferential around the rotor on the stationary circuit breaker housing. The magnetic flux generated by one or more coils on the stator crosses through a radial air gap onto the rotor and back to complete its path. An electromagnetic torque generated by the magnetic flux applies on the rotor and rotates it from its initial, magnetically unaligned position to a position where the rotor and stator poles are aligned. The rotational stroke of the main shaft is converted to a linear motion of the moving contact via a transmission consisting of lever arms, mechanical joints and a pushrod. During the rotation of the main shaft from its starting to its final position, the mechanical power provided by the actuator first brings the moving contacts in contact with the fixed contacts (free travel phase), and then increases the contact force between them by charging the contact springs (contact spring compression phase).

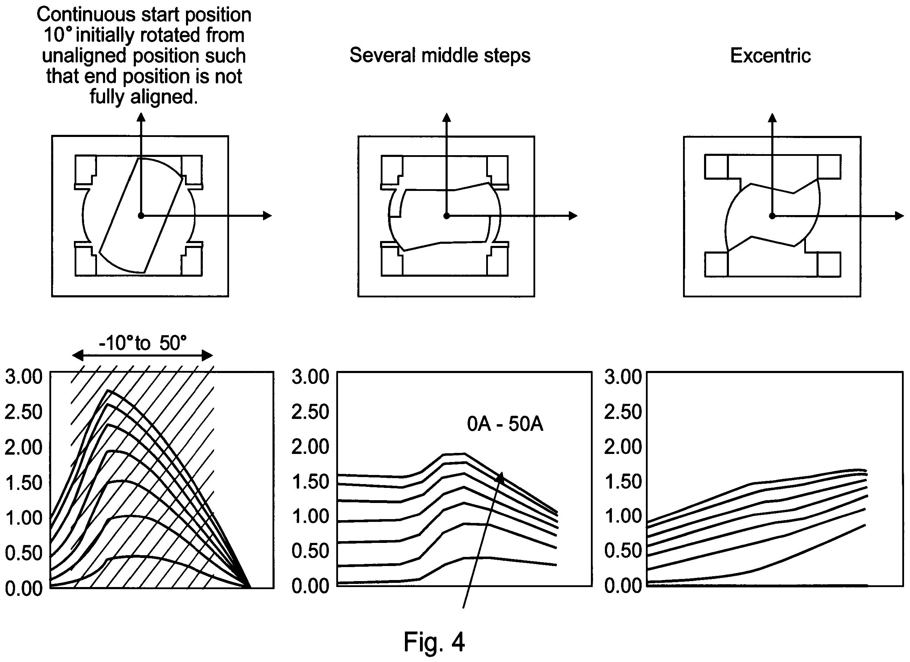

Various embodiments are provided, where features from different embodiments can be combined together.
(a) Embodiments with single-phase:
   The stator contains at least one coil, which generates a magnetic flux when excited with electrical current. This results in a non-zero torque to apply on the rotor for a defined range of rotational angles of the rotor, where this range is less than one whole rotation around the axis (limited-stroke). In case there are more than a single coil on the stator, the coils are connected electrically in series and/or parallel to form one electrical circuit (single phase). In this single phase, limited angular stroke actuator, the total angular stroke matches the limited rotation of the main shaft of the circuit breaker. Doing so, costly multi-phase drive electronics is avoided (as opposed to motor drives, described for example in the paper by P. Bertolotto, M. Bonaconsa, L. Chenet, M. Riva, F. Viaro: The future evolution of medium voltage circuit breakers: new developments and possible applications, CIGRE 2018, Paper A3-304 ). This decreases the cost and increases the reliability at the same time.
(b) Embodiment with soft ferromagnetic materials:
   Both the rotor and the stator of the actuator consist of soft ferromagnetic materials, and no permanent magnets are used. (In other words, the actuator is a reluctance motor or a reluctance actuator). The lack of permanent magnets decreases the cost and can increase the robustness.
(c) Embodiments with eccentricity, step rotor and constant air gap (see Fig. 4).
   In one embodiment, the rotor and stator feature no eccentricity by design. In other words, the outermost surface of the rotor and the innermost surface of the stator poles follow two coaxial circles, the centre of both lying on the axis of the main shaft of the circuit breaker. The radial air gap is equal to the difference of the radii of those circles, and it is constant within the overlapping region of the rotor and stator poles both in the axial and circumferential directions. In a further embodiment, an eccentricity defined by the design of the rotor and stator pole shapes implies a circumferentially varying air gap. For example, a decreasing radial air gap as the rotor rotates towards the aligned position results in an increase of the torque towards the end of the stroke (assuming constant current flowing in the coils). This corresponds to the behavior of the load torque, which is significantly higher in the final contact spring compression phase of the closing operation than in the early free travel phase. In a further embodiment, either one or both of the rotor and/or stator poles feature a stepwise change in their outer (for rotor) and/or inner (for stator) radii. This results in a stepwise change of the air gap as the rotor rotates rather than the continuous change described in the previous embodiment. The effect on the actuators torque profile is similar, but in a more stepwise fashion rather than continuous.
(d) Embodiments with cut stator/rotor (see Fig. 1):
   In an embodiment, the rotor is manufactured as two parts, which can be mounted on an already assembled main shaft with the help of simple nuts and bolts, without disassembling the main shaft. The two rotor parts are advantageously designed as identical halves. Similarly, the stator can be manufactured in two, advantageously identical halves, both advantageously containing at least one magnetic pole of the stator.
(e) Embodiment with E-shaped and C-shaped stators:
   In one embodiment, the magnetic yoke of the stator extends equally in both circumferential sides of the stator pole, providing two equal magnetic paths for the magnetic flux that crosses from the air gap to the stator pole. Alternatively, the yoke can extend unequally on both sides, providing one more permeable and one less permeable path for the flux. This can enable the actuator to fit into housings where the space around the main shaft is not equal on both sides. In a case, the yoke can connect to the stator pole only from one side, providing only a single path for the flux only on one side of the stator pole.
(f) Embodiments with symmetric and asymmetric poles:
   Similar to the embodiments with unequal yoke thickness on both circumferential sides of the stator poles (described above), the stator poles themselves can be designed not to be identical. The circumferential thickness of the pole is defined by the required torque profile and the angular stroke. However, the height of the pole in the radial direction can be different for individual stator poles. This would be advantageous for fitting the actuator in confined spaces where the available space is unequally distributed around the main shaft.
(g) Embodiment with initial angle offset (see Fig. 4):
   In the design with constant air gap, the torque-per-ampere ratio of the actuator is the highest at the unaligned position and reaches zero at the fully aligned position. Therefore, it is intuitive to define the starting position as the angle where rotor and stator poles do not overlap but they are positioned just at the edge of overlapping, in order to maximize the starting torque. However, due to the inductance of the actuator's coils, the current rises with a limited slope once the coil is energized. As the current increases so does the torque, starting to rotate the rotor. This may lead to the rotor already starting to move towards the aligned position (and hence, leaving the position with highest torque-per-ampere ratio) before the current has reached its maximum value. This, in turn, means that the maximum available torque from the actuator cannot be obtained. In order to solve this problem, the rotor's initial position can be adjusted to a position where the rotor needs to rotate a defined amount before the rotor and stator poles start overlapping.
(h) Embodiment with magnetic end stop:
   A protrusion of at least one of the stator poles that the rotor approaches at the end of its rotational travel can have two benefits:
   - Providing an additional magnetic air gap that closes during rotation provides an additional torque component that increases towards the end of the stroke (even if the rest of the rotor and stator poles form a constant air gap)
   - For the eccentric design of the rotor and stator poles, a defined hard stop guarantees a minimum radial air gap between the rotor and the stator poles.
   A hard contact is avoided by adding an additional end-stop of the rotational motion outside of the rotor-stator system at the circuit breaker housing.

Regarding the above description, it is to be noted that the stator and rotor cores can be advantageously manufactured as isolated sheet metals (laminations), as is well known from transformers or rotary electrical machines. Individual sheet thickness can vary between 0.1 mm to 2mm in typical examples. This reduces the eddy currents in the cores, thereby increasing the efficiency and the dynamic performance. However, in order to reduce the costs, the actuator presented here may also be manufactured using solid blocks.

## Claims

1. An actuator for a medium voltage circuit breaker, the actuator comprising:
- a rotor;
- a stator; and
- at least one coil;
wherein, the rotor is configured to be fixedly mounted to a main shaft of a circuit breaker of a medium voltage switchgear such that the rotor and main shaft rotate together;
wherein, the stator is configured to be mounted circumferentially at least partially around the rotor;
wherein, the at least one coil is wound around at least a part of the stator;
wherein when mounted to the main shaft of the circuit breaker the rotor of the actuator is configured to move from a first unaligned position to a second aligned position where poles of the rotor and stator poles at least partially overlap; and
wherein, an angle of rotation of the rotor with respect to the stator is limited by a driving electromagnetic force distribution.

2. Actuator according to claim 1, wherein the stator is configured to be mounted to a stationary housing of the circuit breaker.

3. Actuator according to any of claims 1-2, wherein the rotor comprises a ferromagnetic material.

4. Actuator according to any of claims 1-3, wherein the stator comprises a ferromagnetic material.

5. Actuator according to any of claims 1-4, wherein in the first unaligned position the rotor and stator poles do not overlap.

6. Actuator according to claim 5, wherein in moving from the first unaligned position to the second aligned position the rotor rotates a defined amount with respect to the stator before the rotor and stator poles start to overlap.

7. Actuator according to any of claims 1-6, wherein when in the aligned position an angularly constant air gap separates an outer surface of the rotor from an inner surface of the stator.

8. Actuator according to claim 7, wherein the outer surface of the rotor has a radius of curvature and the inner surface of the stator pole has a radius of curvature, and wherein the radii of curvature share a common origin that is centred on an axis of the main shaft of the circuit breaker.

9. Actuator according to any of claims 1-6, wherein when in the aligned position an angularly varying air gap separates an outer surface of the rotor that faces an inner surface of the stator.

10. Actuator according to claim 9, wherein the outer surface of the rotor has a radius of curvature and the inner surface of the stator has a radius of curvature, and wherein the radii of curvature do not share a common origin.

11. Actuator according to claim 10, wherein in moving from the first unaligned position to the second aligned position the air gap decreases.

12. Actuator according to any of claims 1-6, wherein when in the aligned position a stepwise varying air gap separates an outer surface of the rotor that faces an inner surface of the stator.

13. Actuator according to claim 12, wherein the outer surface of the rotor has a plurality of radii of curvature and the inner surface of the stator has a radius of curvature, or the outer surface of the rotor has a radius of curvature and the inner surface of the stator has a plurality of radii of curvature or the outer surface of the rotor has a plurality of radii of curvature and the inner surface of the stator has a plurality of radii of curvature.

14. Actuator according to claim 13, wherein the radii of curvature share a common origin that is centred on an axis of the main shaft of the circuit breaker.

15. Actuator according to claim 13, wherein the radii of curvature of the rotor and of the stator do not do not share a common origin.

16. Actuator accorsding to claim 13, wherein at least two of radii of curvature of the rotor do not share a common origin with each other.

17. Actuator according to claim 13, wherein at least two of radii of curvature of the stator do not share a common origin with each other.

18. Actuator according any of claims 1-17, wherein the at least one coil is wound around at least a part of a first stator pole and/or the at least one coil is wound around at least a part of a second stator pole.

19. Actuator according to any of claims 1-18, wherein the rotor comprises at least two parts.

20. Actuator according to any of claims 1-19, wherein the stator comprises at least two parts.

21. Actuator according to any of claims 1-20, wherein the stator is configured such that the angle of rotation of the rotor is limited with respect to the stator.

22. Actuator according to claim 21, wherein the stator comprises at least one protrusion, wherein a first stator pole comprises a protrusion and/or a second stator pole comprises a protrusion, and wherein upon actuation as the rotor rotates, it approaches the at least one protrusion.

23. A medium voltage circuit breaker with at least one vacuum interrupter, each comprising moveable electrical contacts for electrical power interruption, operated via a main shaft to which is mounted an actuator according to any of claims 1-22.

## Patentansprüche

1. Aktuator für einen Mittelspannungsleistungsschalter , wobei der Aktuator Folgendes umfasst:
- einen Rotor;
- einen Stator; und
- mindestens einen Spule;
wobei der Rotor dazu ausgelegt ist, fest an einer Hauptwelle eines Leistungsschalters einer Mittelspannungsschaltanlage montiert zu sein, derart, dass der Rotor und die Hauptwelle sich zusammen drehen;
wobei der Stator dazu ausgelegt ist, umfänglich mindestens teilweise um den Rotor montiert zu sein;
wobei die mindestens eine Spule um mindestens einen Teil des Stators gewickelt ist;
wobei der Rotor des Aktuators, wenn er an der Hauptwelle des Leistungsschalters montiert ist, dazu ausgelegt ist, sich von einer ersten nicht ausgerichteten Position zu einer zweiten ausgerichteten Position zu bewegen, in der sich Pole des Rotors und Statorpole mindestens teilweise überlappen; und
wobei ein Drehwinkel des Rotors mit Bezug auf den Stator durch eine Verteilung einer elektromagnetischen Antriebskraft begrenzt ist.

2. Aktuator nach Anspruch 1, wobei der Stator dazu ausgelegt ist, an einem stationären Gehäuse des Leistungsschalters montiert zu sein.

3. Aktuator nach einem der Ansprüche 1-2, wobei der Rotor ein ferromagnetisches Material umfasst.

4. Aktuator nach einem der Ansprüche 1-3, wobei der Stator ein ferromagnetisches Material umfasst.

5. Aktuator nach einem der Ansprüche 1-4, wobei sich die Rotor- und die Statorpole in der ersten nicht ausgerichteten Position nicht überlappen.

6. Aktuator nach Anspruch 5, wobei sich der Rotor beim Bewegen aus der ersten nicht ausgerichteten Position zur zweiten ausgerichteten Position mit Bezug auf den Stator um einen definierten Betrag dreht, bevor die Rotor- und die Statorpole beginnen, sich zu überlappen.

7. Aktuator nach einem der Ansprüche 1-6, wobei in der ausgerichteten Position ein winkelmäßig konstanter Luftspalt eine Außenfläche des Rotors von einer Innenfläche des Stators trennt.

8. Aktuator nach Anspruch 7, wobei die Außenfläche des Rotors einen Krümmungsradius aufweist und die Innenfläche des Statorpols einen Krümmungsradius aufweist und wobei die Krümmungsradien einen gemeinsamen Ursprung aufweisen, der auf einer Achse der Hauptwelle des Leistungsschalters zentriert ist.

9. Aktuator nach einem der Ansprüche 1-6, wobei in der ausgerichteten Position ein winkelmäßig variierender Luftspalt eine Außenfläche des Rotors trennt, die der Innenfläche des Stators zugewandt ist.

10. Aktuator nach Anspruch 9, wobei die Außenfläche des Rotors einen Krümmungsradius aufweist und die Innenfläche des Stators einen Krümmungsradius aufweist und wobei die Krümmungsradien keinen gemeinsamen Ursprung haben.

11. Aktuator nach Anspruch 10, wobei der Luftspalt beim Bewegen aus der ersten nicht ausgerichteten Position zur zweiten ausgerichteten Position größer wird.

12. Aktuator nach einem der Ansprüche 1-6, wobei in der ausgerichteten Position ein schrittweise variierender Luftspalt eine Außenfläche des Rotors trennt, die der Innenfläche des Stators zugewandt ist.

13. Aktuator nach Anspruch 12, wobei die Außenfläche des Rotors eine Vielzahl von Krümmungsradien aufweist und die Innenfläche des Stators einen Krümmungsradius aufweist oder die Außenfläche des Rotors einen Krümmungsradius aufweist und die Innenfläche des Stators eine Vielzahl von Krümmungsradien aufweist oder die Außenfläche des Rotors eine Vielzahl von Krümmungsradien aufweist und die Innenfläche des Stators eine Vielzahl von Krümmungsradien aufweist.

14. Aktuator nach Anspruch 13, wobei die Krümmungsradien einen gemeinsamen Ursprung haben, der auf einer Achse der Hauptwelle des Leistungsschalters zentriert ist.

15. Aktuator nach Anspruch 13, wobei die Krümmungsradien des Rotors und des Stators keinen gemeinsamen Ursprung haben.

16. Aktuator nach Anspruch 13, wobei mindestens zwei Krümmungsradien des Rotors keinen gemeinsamen Ursprung haben.

17. Aktuator nach Anspruch 13, wobei mindestens zwei Krümmungsradien des Stators keinen gemeinsamen Ursprung haben.

18. Aktuator nach einem der Ansprüche 1-17, wobei die mindestens eine Spule um mindestens einen Teil eines ersten Statorpols gewickelt ist und/oder die mindestens eine Spule um mindestens einen Teil eines zweiten Statorpols gewickelt ist.

19. Aktuator nach einem der Ansprüche 1-18, wobei der Rotor mindestens zwei Teile umfasst.

20. Aktuator nach einem der Ansprüche 1-19, wobei der Stator mindestens zwei Teile umfasst.

21. Aktuator nach einem der Ansprüche 1-20, wobei der Stator derart ausgelegt ist, dass der Drehwinkel des Rotors mit Bezug auf den Stator begrenzt ist.

22. Aktuator nach Anspruch 21, wobei der Stator mindestens einen Vorsprung umfasst, wobei ein erster Statorpol einen Vorsprung umfasst und/oder ein zweiter Statorpol einen Vorsprung umfasst und wobei sich der Rotor, wenn er sich dreht, nach der Betätigung dem mindestens einen Vorsprung nähert.

23. Mittelspannungsleistungsschalter mit mindestens einem Vakuumunterbrecher, von denen jeder bewegbare elektrische Kontakte für eine elektrische Stromunterbrechung umfasst, die über eine Hauptwelle betrieben werden, an der ein Aktuator nach einem der Ansprüche 1-22 montiert ist.

## Revendications

1. Actionneur pour un disjoncteur moyenne tension, l'actionneur comprenant :
- un rotor ;
- un stator ; et
- au moins une bobine ;
dans lequel le rotor est configuré pour être monté de manière fixe sur un arbre principal d'un disjoncteur d'un dispositif de commutation moyenne tension de telle sorte que le rotor et l'arbre principal tournent conjointement ;
dans lequel le stator est configuré pour être monté de manière circonférentielle au moins partiellement autour du rotor ;
dans lequel l'au moins une bobine est enroulée autour d'au moins une partie du stator ;
dans lequel lorsqu'il est monté sur l'arbre principal du disjoncteur, le rotor de l'actionneur est configuré pour se déplacer d'une première position non alignée à une seconde position alignée où des pôles des pôles de rotor et de stator se chevauchent au moins partiellement ; et
dans lequel un angle de rotation du rotor par rapport au stator est limité par une répartition de force électromagnétique d'entraînement.

2. Actionneur selon la revendication 1, dans lequel le stator est configuré pour être monté sur un boîtier fixe du disjoncteur.

3. Actionneur selon l'une quelconque des revendications 1 à 2, dans lequel le rotor comprend un matériau ferromagnétique.

4. Actionneur selon l'une quelconque des revendications 1 à 3, dans lequel le stator comprend un matériau ferromagnétique.

5. Actionneur selon l'une quelconque des revendications 1 à 4, dans lequel dans la première position non alignée, les pôles de rotor et de stator ne se chevauchent pas.

6. Actionneur selon la revendication 5, dans lequel pendant le déplacement de la première position non alignée à la seconde position alignée, le rotor tourne d'une quantité définie par rapport au stator avant que les pôles de rotor et de stator commencent à se chevaucher.

7. Actionneur selon l'une quelconque des revendications 1 à 6, dans lequel dans la position alignée, un entrefer angulairement constant sépare une surface externe du rotor d'une surface interne du stator.

8. Actionneur selon la revendication 7, dans lequel la surface externe du rotor a un rayon de courbure et la surface interne du pôle de stator a un rayon de courbure, et dans lequel les rayons de courbure partagent une origine commune qui est centrée sur un axe de l'arbre principal du disjoncteur.

9. Actionneur selon l'une quelconque des revendications 1 à 6, dans lequel dans la position alignée, un entrefer angulairement variable sépare une surface externe du rotor qui fait face à une surface interne du stator.

10. Actionneur selon la revendication 9, dans lequel la surface externe du rotor a un rayon de courbure et la surface interne du stator a un rayon de courbure, et dans lequel les rayons de courbure ne partagent pas d'origine commune.

11. Actionneur selon la revendication 10, dans lequel pendant le déplacement de la première position non alignée à la seconde position alignée, l'entrefer diminue.

12. Actionneur selon l'une quelconque des revendications 1 à 6, dans lequel dans la position alignée, un entrefer progressivement variable sépare une surface externe du rotor qui fait face à une surface interne du stator.

13. Actionneur selon la revendication 12, dans lequel la surface externe du rotor a une pluralité de rayons de courbure et la surface interne du stator a un rayon de courbure, ou la surface externe du rotor a un rayon de courbure et la surface interne du stator a une pluralité de rayons de courbure ou la surface externe du rotor a une pluralité de rayons de courbure et la surface interne du stator a une pluralité de rayons de courbure.

14. Actionneur selon la revendication 13, dans lequel les rayons de courbure partagent une origine commune qui est centrée sur un axe de l'arbre principal du disjoncteur.

15. Actionneur selon la revendication 13, dans lequel les rayons de courbure du rotor et du stator ne partagent pas d'origine commune.

16. Actionneur selon la revendication 13, dans lequel au moins deux de rayons de courbure du rotor ne partagent pas d'origine commune l'un avec l'autre.

17. Actionneur selon la revendication 13, dans lequel au moins deux de rayons de courbure du stator ne partagent pas d'origine commune l'un avec l'autre.

18. Actionneur selon l'une quelconque des revendications 1 à 17, dans lequel l'au moins une bobine est enroulée autour d'au moins une partie d'un premier pôle de stator et/ou l'au moins une bobine est enroulée autour d'au moins une partie d'un second pôle de stator.

19. Actionneur selon l'une quelconque des revendications 1 à 18, dans lequel le rotor comprend au moins deux parties.

20. Actionneur selon l'une quelconque des revendications 1 à 19, dans lequel le stator comprend au moins deux parties.

21. Actionneur selon l'une quelconque des revendications 1 à 20, dans lequel le stator est configuré de telle sorte que l'angle de rotation du rotor est limité par rapport au stator.

22. Actionneur selon la revendication 21, dans lequel le stator comprend au moins une partie saillante, dans lequel un premier pôle de stator comprend une partie saillante et/ou un second pôle de stator comprend une partie saillante, et dans lequel après actionnement lorsque le rotor tourne, il s'approche de l'au moins une partie saillante.

23. Disjoncteur moyenne tension avec au moins un interrupteur à vide, chacun comprenant des contacts électriques mobiles pour une interruption d'énergie électrique, opéré par l'intermédiaire d'un arbre principal sur lequel est monté un actionneur selon l'une quelconque des revendications 1 à 22.
